# EUROPEAN PATENT APPLICATION

(11) **EP 4 186 461 A1**
(43) Date of publication of application: **31.05.2023**
(21) Application number: 22169804.6
(22) Date of filing: 25.04.2022
(51) Int. Cl.: A61C 7/00

(54) **DENTAL ORTHODONTIC ACCELERATOR**

(30) Priority: 29.11.2021 CN 202111432182
(71) Applicant: Nanjing Star Medical Equipment Co., Ltd., Economic Development Zone, Gaochun District Nanjing City Jiangsu 211300 (CN)
(72) Inventor: CHEN, Xinzheng, Nanjing City, Jiangsu Province (CN)
(74) Representative: Ipside

(57) **Abstract**

The present invention relates to the field of medical devices, in particular to a dental orthodontic accelerator that has a simple structure and can improve the orthodontic speed. The dental orthodontic accelerator comprises a lower housing, a vibrating mechanism, an upper housing and a bite gum from bottom to top. The vibrating mechanism comprises a vibrating source support. A vibrating source is arranged in the vibrating source support. A rechargeable battery is connected below the vibrating source. A control circuit board is connected to the rechargeable battery. A control switch is arranged at the bottom of the control circuit board. A through-hole corresponding to the position of the control switch is arranged in the lower housing. During the operation of the dental orthodontic accelerator of the present invention, user bites the bite gum for mastication or occlusion, which will produce masticatory or occlusal force; while the bite gum is masticated, the control switch is turned on to make the vibrating source vibrate; the vibration stimulates the activity of bone cells so that the blood flow is quickened and the orthodontic treatment is accelerated. The dental orthodontic accelerator features a simple structure and accelerated orthodontic treatment.

## Description

### Technical Field

The present invention relates to the field of medical devices, in particular to a dental orthodontic accelerator that has a simple structure and can improve the orthodontic speed.

### Background of the Invention

Orthodontic treatment is mainly used to adjust the coordination between facial bones, teeth as well as maxillofacial nerves and muscles mainly through various orthodontic devices, namely adjusting the abnormal relations between maxilla and mandible, between upper and lower teeth, between teeth and jaw bones and between the nerves and muscles that connect them. The ultimate goal of orthodontic treatment is to make the stomatognathic system achieve balance, stability and beauty.

The orthodontic treatment of malocclusion mainly depends on wearing orthodontic appliances inside or outside the oral cavity. Dental defects are corrected through applying appropriate "biological forces" to teeth, alveolar bones and jaw bones for physiological movement.

The prior art adopts braces for powerful orthodontic treatment. However, this method generally needs a long duration, and braces will affect the beauty for a considerable period of time. Therefore, it is necessary to design an accelerator that can improve the orthodontic speed.

### Summary of the Invention

In view of the defects of prior art, the present invention provides a dental orthodontic accelerator that has a simple structure and can improve the orthodontic speed.

The invention adopts the following technical proposal. The dental orthodontic accelerator comprises a lower housing, a vibrating mechanism, an upper housing and a bite gum from bottom to top. The vibrating mechanism comprises a vibrating source support. A vibrating source is arranged in the vibrating source support. A rechargeable battery is connected below the vibrating source. A control circuit board is connected to the rechargeable battery. A control switch is arranged at the bottom of the control circuit board. A through-hole corresponding to the position of the control switch is arranged in the lower housing.

For better implementation of the invention, a wireless charging coil is arranged inside the lower housing, and the coil is connected to the rechargeable battery.

For better implementation of the invention, a seal bushing around the vibrating source is arranged on the vibrating source support.

For better implementation of the invention, the vibrating source adopts a polarizing or linear motor.

For better implementation of the invention, the bite gum is in a "C" shape suitable for the oral cavity; two tongue baffles are arranged at the internal bottom of the bite gum so as to form a space for accommodating the tongue.

For better implementation of the invention, two teeth wrap baffles are arranged at the external bottom of the bite gum, corresponding to the position of the upper lip and that of the lower lip respectively.

For better implementation of the invention, a connecting rod is arranged at the bottom of the bite gum; locking blocks are arranged on both sides of the connecting rod; corresponding hole sites are arranged on the upper housing.

For better implementation of the invention, an O-type seal ring fits the joint between the connecting rod and the upper housing.

For better implementation of the invention, multiple antiskid protruding points are arranged on the surface of the bite gum. For better implementation of the invention, the bite gum is made from food-grade silica gel material. The beneficial effects of the invention are reflected as follows: The dental orthodontic accelerator of the invention achieves the coordination among lower housing, upper housing, bite gum, vibrating source support, vibrating source, rechargeable battery, control circuit board and control switch. During the operation, user bites the bite gum for mastication or occlusion, which will produce masticatory or occlusal force; while the bite gum is masticated, the control switch is turned on to make the vibrating source vibrate; the vibration stimulates the activity of bone cells so that the blood flow is quickened and the orthodontic treatment is accelerated. The dental orthodontic accelerator features a simple structure and accelerated orthodontic treatment.

### Brief description of the Drawings

In order to more clearly describe the embodiments of the invention or the technical proposal of the prior art, the following is a brief introduction of the drawings required for the description of the embodiments or prior art. In all the drawings, similar elements or parts are generally marked with similar reference signs. Various elements or parts are not necessarily drawn according to the actual scale in the drawings.
Figure 1 is an exploded structure diagram of the dental orthodontic accelerator of the invention;
Figure 2 is a structure diagram of the dental orthodontic accelerator of the invention;
Figure 3 is a top view of Figure 2;
Figure 4 is a sectional view of the dental orthodontic accelerator of the invention;

Wherein, 1 - lower housing, 2 - upper housing, 3 - bite gum, 4 - control circuit board, 5 - rechargeable battery, 6 - vibrating source, 7 - vibrating source support, 8 - seal bushing, 9 - control switch, 10 - through-hole, 11 - wireless charging coil, 12 - connecting rod, 13 - locking blocks, 14 - tongue baffles, 15 - teeth wrap baffles, 16 - antiskid protruding points.

### Detailed Description of Embodiments

The following is the detailed description of the embodiments of the technical proposal of the present invention in combination with the drawings. The following embodiments are only used to more clearly describe the technical proposal of the invention, and are only taken as examples; they shall not be used to limit the extent of protection of the invention.

It should be noted that, unless otherwise stated, the technical or scientific terms used in this application should have the ordinary meanings understood by those skilled in the art which the invention belongs to.

### Embodiment 1:

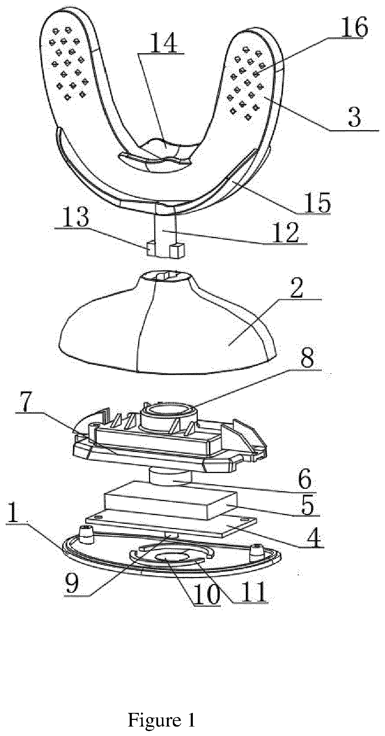

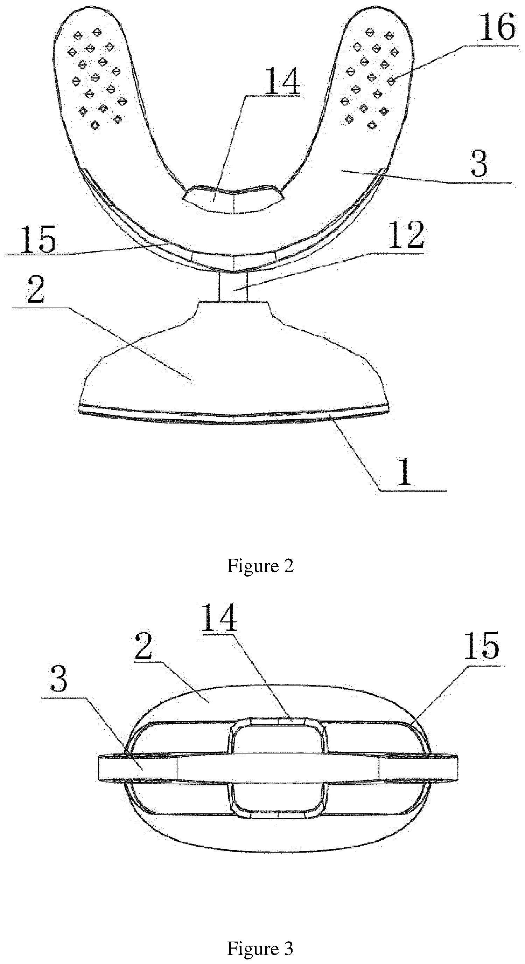

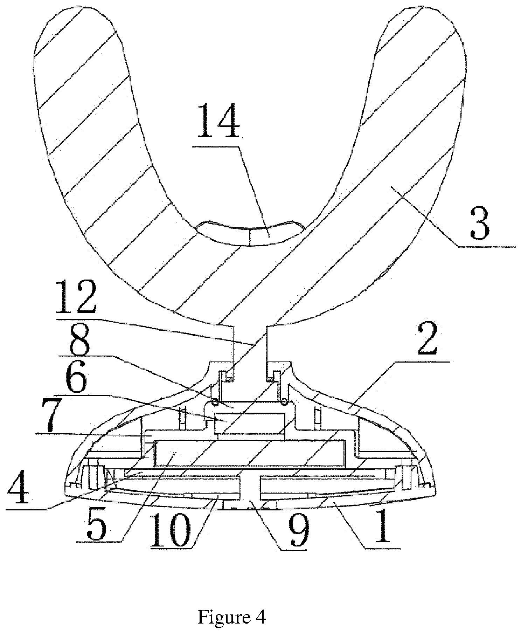

According to Figures 1-4, the dental orthodontic accelerator of the invention comprises a lower housing (1), a vibrating mechanism, an upper housing (2) and a bite gum (3) from bottom to top; the vibrating mechanism comprises a vibrating source support (7); a vibrating source (6) is arranged in the vibrating source support (7); a rechargeable battery (5) is connected below the vibrating source (6); a control circuit board (4) is connected to the rechargeable battery (5); a control switch (9) is arranged at the bottom of the control circuit board (4); a through-hole (10) corresponding to the position of the control switch (9) is arranged on the lower housing (1). The dental orthodontic accelerator of the invention achieves the coordination among lower housing (1), upper housing (2), bite gum (3), vibrating source support, vibrating source (6), rechargeable battery (5), control circuit board (4) and control switch (9). During the operation, user bites the bite gum (3) for mastication or occlusion, which will produce masticatory or occlusal force; while the bite gum (3) is masticated, the control switch is turned on to make the vibrating source (6) vibrate; the vibration stimulates the activity of bone cells so that the blood flow is quickened and the orthodontic treatment is accelerated. The dental orthodontic accelerator features a simple structure and accelerated orthodontic treatment.

### Embodiment 2:

Based on the above embodiment, for further better implementation of the invention, a wireless charging coil (11) is arranged inside the lower housing (1), and the coil (11) is connected to the rechargeable battery (5).

This design allows direct use of wireless charging, without the need of arranging a charging port on the upper housing (2) or lower housing (1), improving the sealing performance.

Preferably, a seal bushing (8) around the vibrating source (6) is arranged on the vibrating source support (7).

This design allows better sealing protection of the vibrating source (6).

Preferably, the vibrating source (6) adopts a polarizing or linear motor.

### Embodiment 3:

Based on the above embodiment, for further better implementation of the invention, the bite gum (3) is in a "C" shape suitable for the oral cavity; two tongue baffles (14) are arranged at the internal bottom of the bite gum (3) so as to form a space for accommodating the tongue. This design allows the placement of the tongue in the space between two tongue baffles (14) when user bites the bite gum (3), improving the comfort of user.

Preferably, two teeth wrap baffles (15) are arranged at the external bottom of the bite gum (3), corresponding to the position of the upper lip and that of the lower lip respectively. This design allows the contact of the teeth wrap baffles (15) with the lips, improving the comfort of user. While the teeth wrap baffles (15) is wrap the teeth, positioning can be achieved, ensuring that braces will not be bitten too deeply to cause vomiting, and can be easily wrapped by the upper and lower lips.

### Embodiment 4:

Based on the above embodiment, for further better implementation of the invention, a connecting rod (12) is arranged at the bottom of the bite gum (3); locking blocks (13) are arranged on both sides of the connecting rod (12); corresponding hole sites are arranged on the upper housing (2). Through this design, the connecting rod (12) fits to the corresponding hole sites, and the locking blocks (13) prevent the connecting rod (12) from being separated from the upper housing (2), playing a role of locking.

Preferably, an O-type seal ring fits the joint between the connecting rod (12) and the upper housing (2), improving the sealing performance.

### Embodiment 5:

Based on the above embodiment, for further better implementation of the invention, multiple antiskid protruding points (16) are arranged on the surface of the bite gum (3). This design increases friction, facilitates occlusion and avoids slipping.

Preferably, the bite gum (3) is made of food-grade silica gel material.

Finally, it should be noted that the above embodiments are only used to describe the technical proposal of the invention and shall not be used to limit it. Although the invention is described in detail with reference to the above embodiments, a person of ordinary skill in the art should understand that modifications can still be made to the technical proposal recorded in the above embodiments or equivalent substitutions can be made for all or part of the technical features therein. Such modifications or substitutions should not make the corresponding technical proposals essentially depart from the scope of the technical proposal in the embodiments of the invention, and should be covered by the claims and specifications of the invention.

## Claims

1. A dental orthodontic accelerator, **characterized in that** it comprises a lower housing (1), a vibrating mechanism, an upper housing (2) and a bite gum (3) from bottom to top; the vibrating mechanism comprises a vibrating source support (7); a vibrating source (6) is arranged in the vibrating source support (7); a rechargeable battery (5) is connected below the vibrating source (6); a control circuit board (4) is connected to the rechargeable battery (5); a control switch (9) is arranged at the bottom of the control circuit board (4); a through-hole (10) corresponding to the position of the control switch (9) is arranged on the lower housing (1).

2. The dental orthodontic accelerator according to Claim 1, **characterized in that** a wireless charging coil (11) is arranged inside the lower housing (1), and the coil (11) is connected to the rechargeable battery (5).

3. The dental orthodontic accelerator according to Claim 1, **characterized in that** a seal bushing (8) around the vibrating source (6) is arranged on the vibrating source support (7).

4. The dental orthodontic accelerator according to Claim 3, **characterized in that** the vibrating source (6) adopts a polarizing or linear motor.

5. The dental orthodontic accelerator according to Claim 1, **characterized in that** the bite gum (3) is in a "C" shape suitable for the oral cavity and two tongue baffles (14) are arranged at the internal bottom of the bite gum (3) so as to form a space for accommodating the tongue.

6. The dental orthodontic accelerator according to Claim 5, **characterized in that** two teeth wrap baffles (15) are arranged at the external bottom of the bite gum (3).

7. The dental orthodontic accelerator according to Claim 1, **characterized in that** a connecting rod (12) is arranged at the bottom of the bite gum (3) and locking blocks (13) are arranged on both sides of the connecting rod (12); corresponding hole sites (14) are arranged on the upper housing (2).

8. The dental orthodontic accelerator according to Claim 7, **characterized in that** an O-type seal ring fits the joint between the connecting rod (12) and the upper housing (2).

9. The dental orthodontic accelerator according to Claim 1, **characterized in that** multiple antiskid protruding points (16) are arranged on the surface of the bite gum (3).

10. The dental orthodontic accelerator according to Claim 1, **characterized in that** the bite gum (3) is made of food-grade silica gel material.
